# EUROPEAN PATENT SPECIFICATION

(11) **EP 2 541 219 B1**
(45) Date of publication and mention of the grant of the patent: **04.09.2019**
(21) Application number: 12173436.2
(22) Date of filing: 25.06.2012
(51) Int. Cl.: G01J 1/42, G01J 1/44

(54) **Photodetector**
Photodetektor
Photodétecteur

(30) Priority: 30.06.2011 IT CO20110022
(43) Date of publication of application: 02.01.2013
(73) Proprietor: Fondazione Bruno Kessler, 38122 Trento (IT)
(72) Inventor: HUF CAMPOS BRAGA, Leo, 38123 POVO (IT); Stoppa, David, 38072 Calavino (IT); Pancheri, Lucio, 38122 Trento (IT); Gasparini, Leonardo, 38057 Pergine Valsugana (IT)
(74) Representative: Torti, Carlo Maria Emilio

(56) References cited:
- US-A1- 2003 141 434
- US-A1- 2009 095 887
- LUCIO PANCHERI ET AL: "A SPAD-based pixel linear array for high-speed time-gated fluorescence lifetime imaging", ESSCIRC, 2009. ESSCIRC '09. PROCEEDINGS OF, IEEE, PISCATAWAY, NJ, USA, 14 September 2009 (2009-09-14), pages 428-431, XP031563346, ISBN: 978-1-4244-4354-3

## Description

### Field of the invention

The present invention relates to a photodetector.

### State of the art

A photodetector comprises, in general, a plurality of pixels.

In applications where it is necessary to detect weak light signals (few photons), such as for example PET [Position Emission Tomography], the pixel must have a high FF [Fill Factor], that is, the useful surface for the detection of the photons must be large compared to the total surface of the pixel (inevitably each pixel has a "lost" surface dedicated to electronics and cabling), but at the same time it must have a low noise, that is, the electrical signal generated at the output must be largely due to photons which hit on the pixel and not on other phenomena. In applications where the photons are counted and where are used, often, SPAD [Single-Photon Avalanche Detector] devices as detection devices, these two requirements are in conflict with each other. In fact, the DCR [Dark Count Rate] of the detection device (that is, its intrinsic noise) increases (more than linearly) with the increase of the area of the device (this is due to physical reasons), and therefore, typically, the SNR [Signal-to-Noise Ratio] of the photodetector, which comprises a plurality of devices, worsens, while, the FF [Fill Factor] of the detection device increases with the increase of the area of the device (this is due in that electronics and cabling weigh less with respect to the detection surface), and therefore the FF [Fill Factor] of the photodetector, which includes a plurality of devices, improves. Therefore, if in a photodetector, for an equal area, are used large detection devices there will be a large FF and a high DCR, while when small detection devices are used there will be a small FF and a low DCR; typically in the detection devices with a pitch in the range between 5 and 100 microns at a high DCR corresponds a low SNR and at a low DCR corresponds a high SNR. Furthermore, it is worth remembering that around the area occupied by a SPAD device, there is also a peripheral zone for the so-called "guard ring", that is, a structure of implants to prevent early break-down phenomena; this element also may contribute to the worsening of the FF of a SPAD device.

Finally, the production yield of a photodetector (integrated) is inversely proportional to the area thereof; in fact, greater is the photodetector, greater is the probability that a defect due to the manufacturing process may occur at a point of the area thereof.

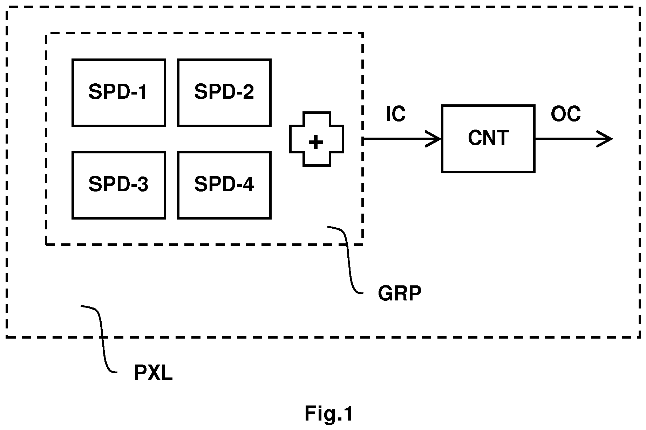

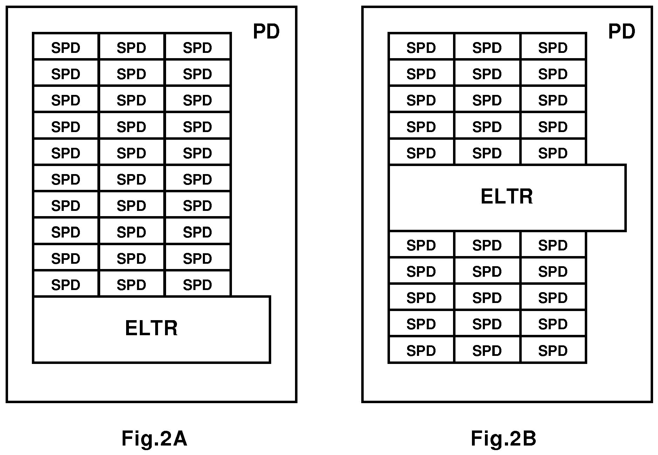

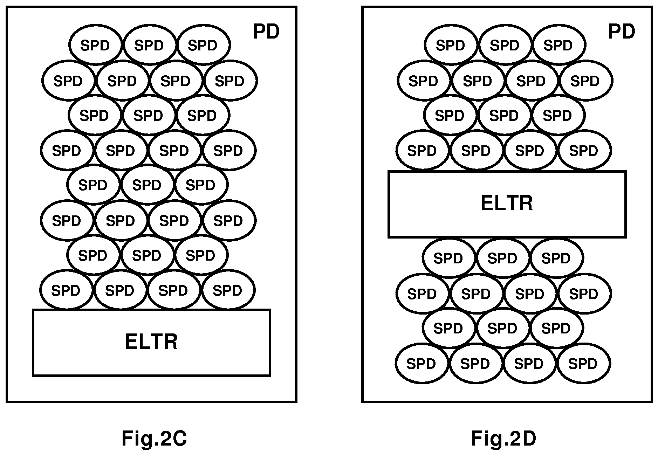

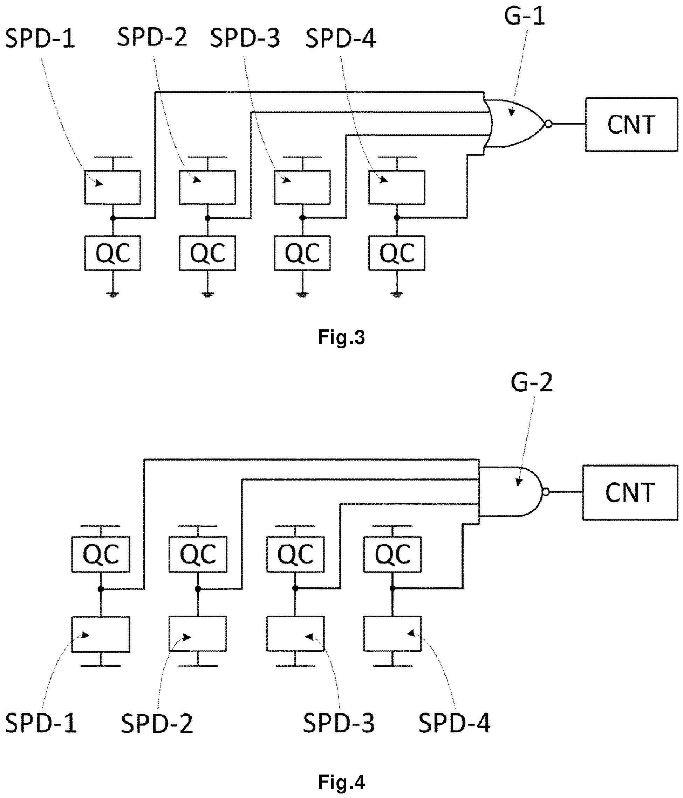

From article "A SPAD-based Pixel Linear Array for High-Speed Time-Gated Fluorescence Lifetime Imaging" by L. Pancheri and D. Stoppa published in the ESSCIRC Proceedings in 2009, a photodetector is known comprising sixty-four aligned pixels to be used for FLIM [Fluorescence Lifetime Imaging Microscopy]; each pixel comprises four SPADs; the outputs of the four SPADs are combined through a "binning" logic gate (see Fig. 3 of the article); to each SPAD is associated a very special circuitry (see Fig. 2 of the article) which comprises, in particular, a rather complex quenching circuit, three monostable (at least two of these belong to the quenching circuit) and a pair of logic gates; the described solution allows to detect the emission of a sample stimulated by a laser pulse during a predetermined time; this predetermined time (for example from 10 nS to 20 nS) is much shorter than the "dead time" of a SPAD (for example from 150 nS to 1 uS); to achieve this objective, this predetermined time is divided into four time windows (W1, W2, W3, W4 in Fig. 1 of the article) and, for each pixel, four counters are provided (that is, one for each time window), which are connected alternatively (MUX in Fig. 3 of the article) to the output of the "binning" logic gate; essential for the solution is the provision, for each SPAD of each pixel, a monostable circuit (M1 in Fig. 2 of the article) adapted to generate a short and predetermined duration pulse to minimise the overlap when the output signals of more than one SPAD are combined, of a monostable circuit (M2 in Fig. 2 of the article) adapted to carry out, with the assistance of other components, a "spadoff" time settable from the outside between 150 nS and 10 uS, and of a monostable circuit (M3 in Fig. 2 of the article) adapted to generate a long Iduration charge pulse.

From patent application US20030141434 is known an integrated circuit having a plurality of optical detectors and of processing elements; the optical detectors are used to detect a captured image by means of an optical, and the processing elements are used to process the detected image. The integrated circuit (1), which is a "vision chip", comprises a plurality of pixels (100) arranged in a matrix; each pixel comprises an optical detector PD (101) and a processing element PE (102); according to all the described and illustrated embodiments, a pixel comprises only one optical detector. The output of the optical detector, which is an analog signal proportional to the intensity of the light signal that has hit it, is converted into a digital signal and then processed through an ALU (Arithmetic Logic Unit); the conversion from analog to digital can be obtained on the basis of the time count of the optical detector discharge. There is a very high number of processing steps (in effect, "pre-processing") of the image that can be made by this chip by operating both on single pixels and on groups of pixels This patent application relates to a solution in which SPAD type devices cannot be used and it fails to address at all either the DCR problem or the FF problem. Further examples of photodetectors according to the prior art are known from US 2009/095887.

### Summary

General object of the present invention is to overcome the limitations of the prior art.

A more specific object of the present invention is to reduce the electronic circuitry of a photodetector, and more particularly that associated with each detection device.

The electronic circuitry associated with the detection device comprises typically, according to the known prior art, a quenching circuit, an analog-digital converter, and a meter.

These and other objects are achieved thanks to the photodetector having the features set out in the claims annexed hereby that form an integral part of the present description. The present invention relates to a photodetector according to claim 1.

The idea underlying the present invention is to include in each pixel a group of detection devices of the SPAD type; then, once defined the area of the pixel on the basis of the desired resolution, by using many "small" devices a low DCR is obtained and therefore typically a high SNR.

In addition, the outputs of the detection devices of the group are all summed up together through a combinational circuit (in the simplest case a logic gate) and then connected to an input of a single digital counter; then, the necessary electronics to process the electrical signals generated by the devices is common to all the devices of the group and a large FF is obtained.

This solution is efficient if the number of photons hitting the pixel in a predetermined time is equal to a small number (for example "one" or "two" or "three", etc.), preferably "one"; this will become clearer later on.

There are basically two methods to put into practice the present invention: the "spatial compression" and "time compression"; at the base of the "spatial compression" is the idea of reducing the number of optical events detectable in the photosensitive space; at the basis of "time compression" is the idea of reducing the time of the electrical pulses triggered by optical events (arrival of a photon on a detection device). These two methods can also be combined with each other.

Of course, to implement the technical teachings just disclosed, appropriate electronic circuitry is required.

In general, a photodetector according to the present invention comprises a plurality of pixels; each one of said pixels comprises a group of detection devices provided with respective outputs, each one of said detection devices being of the SPAD type and therefore being adapted to generate an electrical pulse (pseudo-digital) at its output as a result of an event (optical) corresponding to a photon which impacts thereon, a combinational circuit that has an output (typically, only one output) and a group of inputs corresponds to said group of detection devices and that implements a logic function (more precisely a "Boolean logic function") between inputs and output, a (typically, only one) digital counter which has an input; all outputs of said detection devices of said group are connected respectively to the inputs of said combinational circuit and the output of said combinational circuit is connected to the input of said digital counter; in this way, said digital counter provides in output the sum of all the events (optical) detected by said detection devices of said group.

Typically, all said detection devices of said group are permanently active. Typically, all said outputs of said detection devices of said group are permanently combined between each other through said combinational circuit.

Typically, said output of said combinational circuit is permanently connected to said input of said digital counter.

Typically, said detection devices of said group are as a number, between 4 and 1,000, preferably between 10 and 400.

Typically, said detection devices of said group are arranged at a bi-dimensional array.

Said combinational circuit implements a logic function between inputs and output corresponding typically to an OR, or NOR, or AND, or NAND, or XOR, or XNOR; in this case, the combinational circuit can be seen as a single logic gate having a very large number of inputs.

Advantageous technical characteristics of the present invention will be disclosed later.

Said logic gate (or equivalent combinational circuit) can be of various types, OR, or NOR, or AND, or NAND, provided that it has the effect of "adding" the outputs of the various detection devices; it is worth remembering here that logic gate OR can be made in practice as "wired-OR"; it is likewise worth remembering here that an OR gate carries out the sum of digital signals in positive logic, while an AND gate carries out the sum of digital signals in negative logic.

A particularly advantageous choice for said logic gate (or equivalent combinational circuit) is XOR, or XNOR; in fact, through this type of logic gate it is also possible to detect more events (optical) close to each other, namely electrical pulses (triggered by optical events) partially superimposed temporally; this will become clearer from the detailed description that follows.

Typically, said logic gate (or equivalent combinational circuit) is provided with a group of inputs and an output; said output is connected to said input of said CNT counter and said group of inputs is connected respectively to said outputs of said detection devices of said group; this is the basic topology for achieving the "spatial compression".

To achieve the "temporal compression", between said outputs of said detection devices of said group and said logic gate (or equivalent combinational circuit) a group of circuit generators of electrical pulses (digital or pseudo-digital) (preferably monostable circuits) are connected respectively. In particular, said circuit generators of electrical pulses (digital or pseudo-digital) are adapted to generate pulses of predetermined time and preferably equal to each other.

Typically, each one of said detection devices of said group is connected to a quenching circuit; should such a circuit be associated to the detection device, that is, should it be placed in the vicinity of the detection device, it would slightly reduce the FF; to ensure that this reduction of the FF is only slight, it is advantageous to use a "passive" quenching circuit, that is, simply constituted by a single resistor or by a single transistor (in particular a single transistor of the MOS type).

Typically, each one of said detection devices of said group is connected to an analog-digital converter (in particular and advantageously to a single bit); should this circuit be placed in the vicinity of the detection device, it would slightly reduce the FF. Advantageously, according to the present invention, this conversion is carried out directly by the input stage of a logic gate or of a monostable circuit since, typically, the electrical pulses generated by the detection devices are "pseudo-digital", that is, very similar to electrical digital signals.

Downstream of said logic gate (or equivalent combinational circuit) can be connected a further circuit generator of electrical pulses (digital or pseudo-digital) (preferably a monostable circuit); this is the basis topology for making both the "spatial compression" and the "time compression".

Downstream of said further circuit generator of electrical pulses (digital or pseudo-digital), a further logic gate can be connected (or equivalent combinational circuit); in this way, the "spatial compression" combination and that of the "temporal compression" can be iterated.

Said detection devices of said group can be for example of an elliptical shape (in particular arranged in a hexagonal lattice) or rectangular.

Said pixels of said plurality are typically grouped together to form a bi-dimensional array or two bi-dimensional arrays; the electronic circuitry associated to said detection elements of said plurality may be placed laterally or centrally with respect to said one bi-dimensional array or to said two bi-dimensional arrays.

### List of the figures

The technical characteristics of the present invention and its advantages will become clear from the following description to be considered in conjunction with the drawings herewith annexed, wherein:
Fig.1 shows a general block diagram of an example of a pixel according to the present invention which includes four detection devices.
Fig.2 shows four possible arrangements (A, B, C, D) for a photodetector according to the present invention.
Fig.3 shows the electric diagram of a first embodiment of a pixel according to the present invention that implements the "spatial compression".
Fig.4 shows the electric diagram of a second embodiment of a pixel according to the present invention that implements the "spatial compression".
Fig.5 shows the circuit diagram (A) of a third embodiment of a pixel according to the present invention that implements the "compression space", and two related timing diagrams (B and C) of some of the electrical signals thereof in two different situations.
Fig.6 shows the circuit diagram (A) of a fourth embodiment of a pixel according to the present invention that implements the "temporal compression", and a related timing diagram (B) of some of the electrical signals thereof, and
Fig.7 shows the electric diagram of a fifth embodiment of a pixel according to the present invention that implements both the "compression space" and the "temporal compression".

### Detailed description

Both this description and these drawings are to be considered by way of illustration purposes only and therefore not limiting, and therefore, the present invention can be implemented according to other and different embodiments.

In the description that follows, reference will be made to detecting devices of the SPAD type, that is, "Single-Photon Avalanche Detector"; however, it should not be excluded that the present invention can be accomplished by means of detection devices equivalent to the SPAD.

In addition, in the description that follows, reference will be made to groups formed by four detection devices, for graphics and display ease, although in the most typical embodiments of the present invention the number of devices is considerably larger, that is, from a minimum of four to a maximum of one thousand, and, more typically from a minimum of ten to a maximum of four hundred. For example, in a photodetector made by the Applicant, 32 x 32 pixels have been integrated each comprising 180 SPADs.

Finally, in the description that follows, reference will be made to simple logic gates, for graphics and display ease; however, especially in the case in which the groups are formed by many detection devices, combinational circuits will be used that implement logic functions (more precisely "Boolean logic functions") between inputs and output typically corresponding to an OR, a NOR, an AND, a NAND, a XOR, a NXOR.

Fig.1 shows a general block diagram of an example of a pixel PXL according to the present invention that comprises a group GRP of four optical detection devices SPD-1, SPD-2, SPD-3, SPD-4; it relates in particular to four devices of the SPAD type.

The electrical signals at the output of devices SPD-1, SPD-2, SPD-3, SPD-4 are combined among them (a "cross" or an "add" symbol in the Figure is to be noted) through a logic gate (G-1, G-2, G-3, G-4, G-5A, G-5B, G-6, G-7) and provided at input IC of a single digital counter CNT; it can be said that the logic gate (or equivalent combinational circuit) provides at the output thereof the "sum" (which is a signal) of all the signals generated by devices SPD-1, SPD-2, SPD-3, SPD-4 of the GRP group; it can be said that the counter CNT provides at the output OC the "sum "(which is a number) of all the events detected by devices SPD-1, SPD-2, SPD-3, SPD-4 of the GRP group.

As will be explained later, such "signal sum" is of the digital type and is carried out by a simple logic gate (or equivalent combinational circuit). In the case of the example of Fig. 1 (but also of Fig. 3, Fig. 4, Fig. 5A, Fig. 7) the analog-digital conversion (which is, in the specific, at only one bit) is made directly and advantageously from the input stage of the logic gate which receives in input "pseudo-digital" electrical signals generated by the optical detection devices. According to the present invention, the digital counter can be of various types: in particular, it may be adapted to count independently from time (in this case, it is appropriate to provide that the counter may be reset) or adapted to count only in a timing window that can be set by the user (in this case, it may also be provided that the counter may be reset) - it may be sought to set the starting instant of the timing window and/or the end instant of the timing window, the duration of the timing window.

It is worthwhile to point out that for each pixel of the electronic circuitry is provided, in particular, a quenching circuitry (not shown in the figure), the sum circuitry, and the counting circuitry. In the conceptual diagram of Fig.1, these electronic circuitries are placed close to the optical detection devices; in the integrated embodiments of the present invention, the positioning could be very different; in fact, typically, the quenching circuitry, the sum circuitry and the counting circuitry and any other possible processing circuitry will be at a distance from the optical detection devices to avoid worsening the FF.

The Figures of Fig. 2 show four possible arrangements for a PD photodetector according to the present invention. In Fig. 2A and Fig. 2B, the optical detection devices SPD have a rectangular shape (in particular square); in Fig. 2C and Fig. 2D, the optical detection devices SPD have an elliptical shape (in particular, circular), and, in particular, are arranged according to a hexagonal lattice); the preferred shape of the detection device is square with rounded corners. In Fig. 2A and Fig. 2C, the optical detection devices SPD are grouped to form a bi-dimensional array and the various ELTR electronic circuits of the PD photodetector are placed laterally with respect to the bi-dimensional array; in Fig. 2B and Fig. 2D, the SPD optical detection devices are grouped to form two bi-dimensional arrays and the various ELTR electronic circuits of the PD photodetector are placed centrally with respect to the two bi-dimensional arrays. Although in the Figures of Figure 2 it is not highlighted, the SPD devices are grouped to constitute pixels as that shown conceptually in Fig. 1; the most typical arrangement of the SPD devices is of the bi-dimensional arrays; in other words, the arrays drawn in Fig. 2 are pixel bi-dimensional arrays and therefore bi-dimensional arrays of bi-dimensional arrays of optical detection devices.

The pixel of Fig. 3 comprises four SPD-1, SPD-2, SPD-3, SPD-4 devices of the SPAD type; each one of these devices is connected directly to a corresponding QC quenching circuitry (to ground) and directly to an input of a G-1 logic gate of the NOR type; the output of the G-1 logic gate is connected directly to the input of a single CNT digital counter; this circuit operates in positive logic.

The pixel of Fig. 4 comprises four SPD-1, SPD-2, SPD-3, SPD-4 devices of the SPAD type; each one of these devices is connected directly to a corresponding QC quenching circuitry (to a positive supply terminal) and directly to an input of a G-2 logic gate of the NAND type; the output of the G-2 logic gate is connected directly to the input of a single CNT digital counter; this circuit operates in negative logic.

The operation of the pixels of Fig. 3 and of Fig. 4 is analog: when a photon strikes one of the SPADs, an electrical pulse is generated that is transmitted, through the logic gate (G-1 or G-2) to the CNT counter that counts it by increasing the accumulated number; this electric pulse is of a relatively "long" time; since the area of each SPAD is much less than the total area of the pixel (it is one quarter) the total DCR of the pixel thus made is less than the total DCR of the pixel should it have been made by a single SPAD; since the electronic circuitry required for each SPAD according to this solution is a little, the reduction of FF compared to a solution based on a single SPAD per pixel is small.

If two photons strike two SPADs of the pixel in two very close times (that is, with a delay less than the time of the pulse caused by one SPAD), the electrical pulses that reach the logic gate (G-1 or G-2) could be temporally overlapped and therefore give rise to a single digital pulse at the output of the logic gate thereof; in this case, the CNT counter would not perform a correct count; however, the present invention is created for applications where it is necessary to detect weak light signals, and therefore this case must be deemed rare.

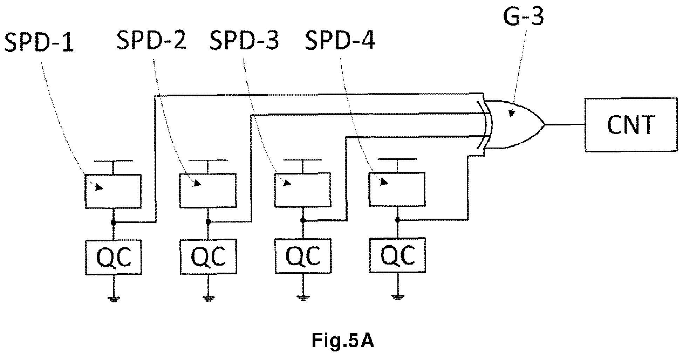

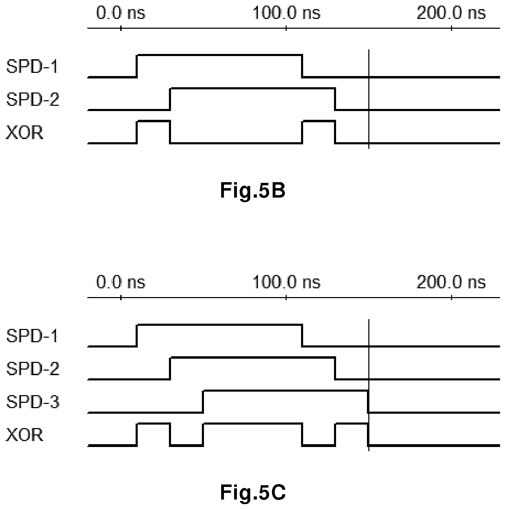

The pixel of Fig. 5A differs from the pixel of Fig. 3 in that instead of employing a logic gate G-1 of the OR type, it uses a logic gate G-3 of the XOR type; should the photons strike the SPADs of the pixel in distant times, the operation of the pixel of Fig.5 is identical to that of Fig. 3; instead, should photons strike the SPADs of the pixel in close times, the operation is different and advantageous.

Fig. 5B relates to the case wherein two photons struck two different SPADs (in particular devices SPD-1 and SPD-2) in close times; the electrical pulses which reach logic gate G-3 are partially overlapped; thanks to the peculiarity of the "XOR" logic function, at the output of logic gate G-3 are generated two logic pulses that are correctly counted by the CNT counter.

Fig. 5C relates to the case wherein three photons struck three different SPADs (in particular devices SPD-1, SPD-2 and SPD-3) in close times; the electrical pulses which reach logic gate G-3 are partially overlapped; thanks to peculiarity of the XOR logic function at the output of logic gate G-3 are generated three logic pulses that are correctly counted by the CNT counter.

Therefore, thanks to the use of the "XOR" logic function, the pixel is able to accept also a predetermined number of photon collisions close in time.

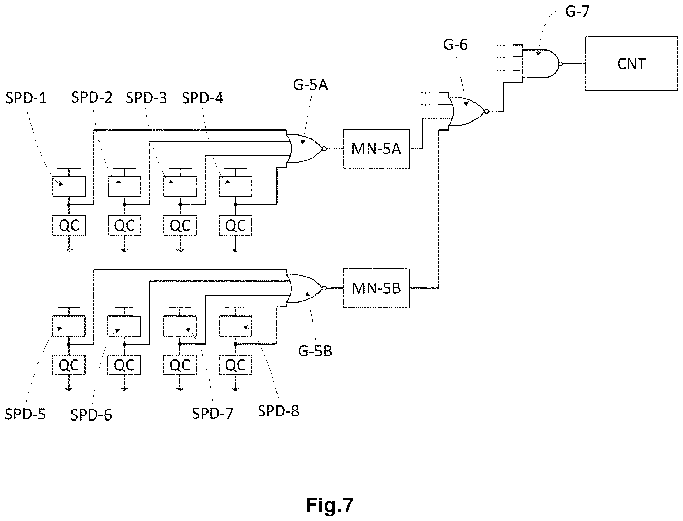

The embodiments of Fig. 3, Fig. 4, and Fig. 5A are of the "spatial compression" type. In these three advantageous embodiments, the pixel consists, that is, comprises exclusively a plurality of SPADs, a corresponding plurality of associated "passive" quenching circuits, a combinational circuit having inputs connected respectively and directly to the SPAD outputs of, and only, one digital counter having only one input connected to the only output of the combinational circuit; in the case of the advantageous embodiment of Fig. 7 (as will be illustrated in more detail below), this same structure is used even if the digital counter is connected indirectly to the single output of the combinational circuit.

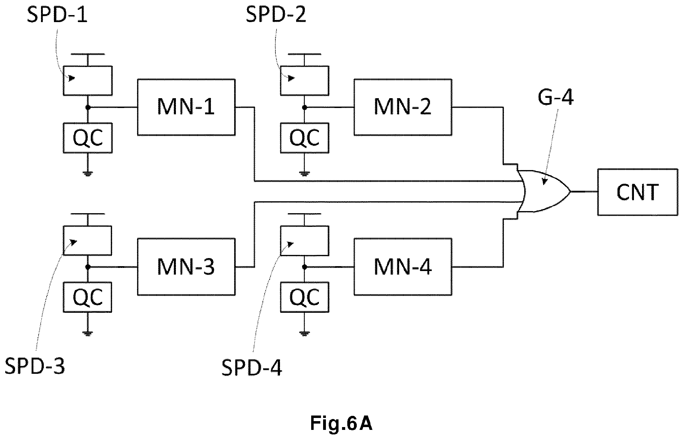

The embodiment of Fig. 6A is instead of the "temporal compression" type. The pixel of Fig. 6A is similar to that of Fig. 3, but it differs in that the used logic gate G-4 is of the OR type and in that, even more important, among each of the optical detection devices and the corresponding input of the logic gate there is a pulse generator circuit, specifically a monostable circuit; the pixel comprises therefore four monostable circuits MN-1, MN-2, MN-3, MN-4, each one of the monostable circuits of Fig. 6A is adapted to generate a positive digital electrical pulse at the output thereof in response to a rising edge in the electrical signal at the input thereof (alternative solutions may provide, for example, negative pulses rather than positive or sensitivity to the falling edges instead of the rising edges); in particular, the monostable circuits MN-1, MN-2, MN-3, MN-4 are adapted to generate pulses of predetermined duration and are equal to each other.

In the case of the example of Fig. 6A, the analog-digital conversion (which is in the specific at only one bit) is made directly and advantageously from the input stage of the monostable circuit which receives in input "pseudo-digital" electrical signals generated by an optical detection device.

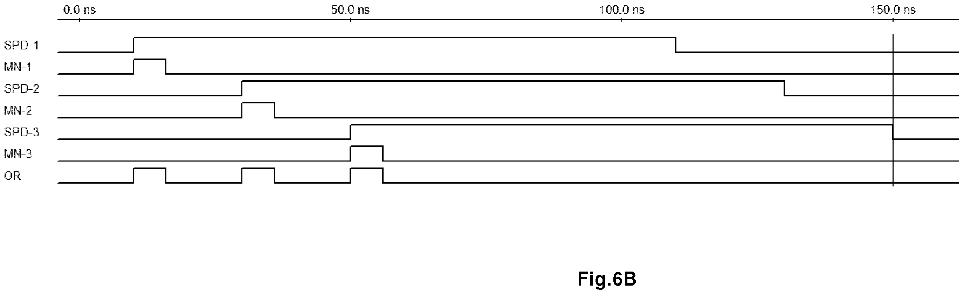

Fig. 6B relates to a case wherein three photons struck three different SPADs (in particular the SPD-1, SPD-2 and SPD-3 devices) in close times; the rising edges of the three electrical pulses generated by the SPADs, which are of long duration, reach the respective monostable circuits which generate, in response, three short electrical pulses; the three long electrical pulses are temporally overlapped (and therefore would not be properly counted by the CNT counter), while the three short electrical pulses are not temporally overlapped since the timing distance between an optical event and the next is greater than the duration of the electrical pulse generated by the monostable circuit; the three short electrical pulses reach logic gate G-4, are added together and then sent to the CNT counter that counts them correctly.

In the advantageous embodiment of Fig. 6A, the pixel consists, that is, comprises exclusively of a plurality of SPADs, a corresponding plurality of associated "passive" quenching circuits, a combinational circuit having inputs connected respectively to the outputs of the SPADs through a corresponding plurality of monostable circuits and a single digital counter having only one input connected to the only output of the combinational circuit.

The embodiment of Fig. 7 combines both the "spatial compression" and the "temporal compression"; it must be noted that Fig. 7 is only a partial representation of the pixel.

The pixel of Fig. 7 provides first four SPD-1, SPD--2, SPD-3, SPD-4 devices of the SPAD type (with related QC quenching circuits) connected to a logic gate G-5A of the NOR type (this set of components implements a first "spatial compression") and second four SPD-5, SPD-6, SPD-7, SPD-8 devices of the SPAD type (with related QC quenching circuits) connected to a logic gate G-5B of the NOR type (this set of components implements a second "spatial compression "); the outputs of the logic gate G-5A and G-5B are connected to respective inputs of a logic gate G-6 (equipped with a total of four inputs in the example of Fig. 7) of the NOR type, respectively, through two monostable circuits MN-5A and MN-5B (this set of components implements a "temporal compression"); the output of the logic gate G-6 is connected to a respective input of a logic gate G-7 (equipped with a total of four inputs in the example of Fig. 7) of the NAND type (this set of components implements a further "compression"); the output of logic gate G-7 is connected to a CNT digital counter.

It is understood that the pixel of Fig. 7 has a topology that allows it to group together 64 optical detection devices, in particular SPADs, by using both the "spatial compression" and the "temporal compression". The operation of such a pixel is fully guaranteed in those applications where there is a low probability that more than one photon strikes the pixel area in a predetermined time interval (even if it can be accepted that two or three "optical events" may occur in this interval of time); the area of the pixel corresponds to the sum of the areas of all the devices of optical detection that compose it.

In general, as far as the "spatial compression" is concerned, the maximum frequency of the "optical events" is limited by the "recovery time" of the optical detection device (and is also linked to the circuitry connected to the output of the optical detection device), whereas as far as the "temporal compression" is concerned, the maximum frequency of the "optical events" is limited by the duration of the pulse generated by pulse circuit generator connected to the output of the optical detection device.

It is worth highlighting that the described "compressions" are such as not to cause loss of information related to the incident optical signal (or a very small loss) should they be used in cases of weak photon flows.

In addition, the described "compressions" allow obtaining the optical signal detection by means of reduced electric energy consumption, in particular because the flow of data resulting from reading of the photodetector detection devices is greatly reduced.

In the described and illustrated advantageous embodiments, the pixel also comprises a circuit element that can be considered already a processing circuit element of the detected optical signal, that is, the digital counter. In fact, a very important aspect of the present invention is the pixel as a set of a SPAD plurality and a combinational circuit (in particular a logic gate); to these a corresponding plurality of quenching circuits can be added (advantageously "passive"); eventually, to these a corresponding plurality of monostable circuits may be added. In addition, or alternatively, it can be envisaged, for example, a TDC [Time to Digital Converter] or a TDA [Time to Analog Converter] to the digital counter.

## Claims

1. Photodetector (PD) comprising a plurality of pixels (PXL),
wherein each of said pixels (PXL) comprises:
- a first group of four detecting devices (SPD-1, SPD-2, SPD-3, SPD-4) provided with respective outputs respectively directly connected to a passive quenching circuitry (QC), each one of said detecting devices (SPD-1, SPD-2, SPD-3, SPD-4) being of the Single Photon Avalanche Detector (SPAD) type and therefore being adapted to generate an electric pulse at the output thereof in consequence of an event corresponding to a single photon that hits thereon,
- each detecting device (SPD-1, SPD-2, SPD-3, SPD-4) of said first group being connected to a logic gate (G-5A) of the NOR type;
a second group of four detecting devices (SPD-5, SPD-6, SPD-7, SPD-8) provided with respective outputs respectively directly connected to a passive quenching circuitry (QC), each one of said detecting devices (SPD-5, SPD-6, SPD-7, SPD-) being of the SPAD type,
- each detecting device (SPD-5, SPD-6, SPD-7, SPD-8) of said second group being connected to a logic gate (G-5B) of the NOR type;
wherein the outputs of the logic gates (G-5A and G-5B) are connected to respective inputs of a logic gate (G-6) of the NOR type, respectively, through two monostable circuits (MN-5A and MN-5B), thus implementing a temporal compression;
the output of said logic (G-6) being connected to a respective input of a logic gate (G-7) of the NAND type, thus implementing a further compression;
the output of said logic gate (G-7) being connected to the input of a digital counter (CNT).

2. Photodetector according to claim 1, wherein each of logic gates (G-5A, G-5B) is adapted to implement a logic function between inputs and output corresponding to a XOR or a XNOR.

3. Photodetector according to claim 1, wherein said monostable circuits (MN-5A and MN-5B) are adapted to generate electric pulses of a predetermined length and are preferably equal to each other.

4. Photodetector according to claim 1, wherein said detecting devices (SPD-1, SPD-2, SPD-3, SPD-4, SPD-5, SPD-6, SPD-7 and SPD-8) of said first and second groups, respectively, are in a number comprised between 4 and 1,000, preferably between 10 and 400.

5. Photodetector according to any one of the preceding claims, wherein said detecting devices (SPD-1, SPD-2, SPD-3, SPD-4, SPD-5, SPD-6, SPD-7 and SPD-8) of said first and second groups, respectively, are arranged in a bi-dimensional array.

6. Photodetector according to any one of the preceding claims, wherein said pixels of said plurality are grouped together to form a bi-dimensional array or two bi-dimensional arrays, and wherein electronic circuitry (ELTR) associated to said detecting elements (SPD) of said plurality is placed laterally or centrally with respect to said one bi-dimensional array or to said two bi-dimensional arrays.

## Patentansprüche

1. Photodetektor (PD), der mehrere Pixel (PXL) umfasst, wobei jedes der Pixel (PXL) umfasst:
- eine erste Gruppe aus vier Detektionsvorrichtungen (SPD-1, SPD-2, SPD-3, SPD-4), die mit jeweiligen Ausgängen bereitgestellt sind, welche jeweils mit einer passiven Löschschaltung (QC) direkt verbunden sind, wobei jede der Detektionsvorrichtungen (SPD-1, SPD-2, SPD-3, SPD-4) vom Typ eines Einzelphotonen-Lawinendetektors (SPAD-Typ) ist und daher angepasst ist, um an dem Ausgang derselben einen elektrischen Impuls infolge eines Ereignisses zu erzeugen, welches einem einzelnen Photon entspricht, das darauf auftrifft,
- wobei jede Detektionsvorrichtung (SPD-1, SPD-2, SPD-3, SPD-4) der ersten Gruppe mit einem Logikgatter (G-5A) vom NOR-Typ verbunden ist;
eine zweite Gruppe aus vier Detektionsvorrichtungen (SPD-5, SPD-6, SPD-7, SPD-8), die mit jeweiligen Ausgängen bereitgestellt sind, welche jeweils mit einer passiven Löschschaltung (QC) direkt verbunden sind, wobei jede der Detektionsvorrichtungen (SPD-5, SPD-6, SPD-7, SPD-8) vom SPAD-Typ ist,
- wobei jede Detektionsvorrichtung (SPD-5, SPD-6, SPD-7, SPD-8) der zweiten Gruppe mit einem Logikgatter (G-5B) vom NOR-Typ verbunden ist;
wobei die Ausgänge der Logikgatter (G-5A und G-5B) jeweils mit jeweiligen Eingängen eines Logikgatters (G-6) vom NOR-Typ durch zwei monostabile Schaltungen (MN-5A und MN-5B) verbunden sind, wodurch eine zeitliche Kompression implementiert wird;
wobei der Ausgang der Logik (G-6) mit einem jeweiligen Eingang eines Logikgatters (G-7) vom NAND-Typ verbunden ist, wodurch eine weitere Kompression implementiert wird;
wobei der Ausgang des Logikgatters (G-7) mit dem Eingang eines digitalen Zählers (CNT) verbunden ist.

2. Photodetektor nach Anspruch 1, wobei jedes der Logikgatter (G-5A, G-5B) angepasst ist, um eine Logikfunktion zwischen Eingängen und einem Ausgang zu implementieren, die einem XOR oder einem XNOR entspricht.

3. Photodetektor nach Anspruch 1, wobei die monostabilen Schaltungen (MN-5A und MN-5B) angepasst sind, um elektrische Impulse mit einer vorbestimmten Länge zu erzeugen und vorzugsweise zueinander gleich sind.

4. Photodetektor nach Anspruch 1, wobei die Detektionsvorrichtungen (SPD-1, SPD-2, SPD-3, SPD-4, SPD-5, SPD-6, SPD-7, SPD-8) der ersten und zweiten Gruppen jeweils in einer Anzahl vorhanden sind, die zwischen 4 und 1000 und vorzugsweise zwischen 10 und 400 umfasst.

5. Photodetektor nach einem der vorstehenden Ansprüche, wobei die Detektionsvorrichtungen (SPD-1, SPD-2, SPD-3, SPD-4, SPD-5, SPD-6, SPD-7, SPD-8) der ersten und zweiten Gruppe jeweils in einer zweidimensionalen Matrix angeordnet sind.

6. Photodetektor nach einem der vorstehenden Ansprüche, wobei die Pixel der mehreren Pixel miteinander gruppiert sind, um eine zweidimensionale Matrix oder zwei zweidimensionale Matrizen zu bilden, und wobei elektronische Schaltkreise (ELTR), die mit den Detektionselementen (SPD) der mehreren Detektionselemente verbunden sind, mit Bezug auf die eine zweidimensionale Matrix oder die zwei zweidimensionalen Matrizen seitlich oder zentral platziert sind.

## Revendications

1. Photodétecteur (PD) comprenant une pluralité de pixels (PXL),
dans lequel chacun desdits pixels (PXL) comprend :
- un premier groupe de quatre dispositifs de détection (SPD-1, SPD-2, SPD-3, SPD-4) pourvus de sorties respectives connectées respectivement directement à un circuit coupeur passif (QC), chacun desdits dispositifs de détection (SPD-1, SPD-2, SPD-3, SPD-4) étant du type détecteur à avalanche déclenchée par un photon unique (SPAD) et étant donc adapté pour générer une impulsion électrique au niveau de la sortie de celui-ci à la suite d'un événement correspondant à un photon unique qui le frappe,
- chaque dispositif de détection (SPD-1, SPD-2, SPD-3, SPD-4) dudit premier groupe étant connecté à une porte logique (G-5A) du type NON-OU ;
un second groupe de quatre dispositifs de détection (SPD-5, SPD-6, SPD-7, SPD-8) pourvus de sorties respectives connectées respectivement directement à un circuit coupeur passif (QC), chacun desdits dispositifs de détection (SPD-5, SPD-6, SPD-7, SPD-8) étant du type SPAD,
- chaque dispositif de détection (SPD-5, SPD-6, SPD-7, SPD-8) dudit second groupe étant connecté à une porte logique (G-5B) du type NON-OU ;
dans lequel les sorties des portes logiques (G-5A et G-5B) sont connectées à des entrées respectives d'une porte logique (G-6) du type NON-OU, respectivement, par l'intermédiaire de deux circuits monostables (MN-5A et MN-5B), pour ainsi implémenter une compression temporelle ;
la sortie de ladite porte logique (G-6) étant connectée à une entrée respective d'une porte logique (G-7) du type NON-ET, pour ainsi implémenter une compression supplémentaire ;
la sortie de ladite porte logique (G-7) étant connectée à l'entrée d'un compteur numérique (CNT).

2. Photodétecteur selon la revendication 1, dans lequel chacune des portes logiques (G-5A, G-5B) est adaptée pour implémenter une fonction logique entre des entrées et une sortie correspondant à un OU exclusif ou un NON-OU exclusif.

3. Photodétecteur selon la revendication 1, dans lequel lesdits circuits monostables (MN-5A et MN-5B) sont adaptés pour générer des impulsions électriques d'une longueur prédéterminée et sont de préférence égales les unes aux autres.

4. Photodétecteur selon la revendication 1, dans lequel lesdits dispositifs de détection (SPD-1, SPD-2, SPD-3, SPD-4, SPD-5, SPD-6, SPD-7 et SPD-8) desdits premier et second groupes, respectivement, sont en un nombre compris entre 4 et 1000, de préférence entre 10 et 400.

5. Photodétecteur selon l'une quelconque des revendications précédentes, dans lequel lesdits dispositifs de détection (SPD-1, SPD-2, SPD-3, SPD-4, SPD-5, SPD-6, SPD-7 et SPD-8) desdits premier et second groupes, respectivement, sont agencés dans un réseau bidimensionnel.

6. Photodétecteur selon l'une quelconque des revendications précédentes, dans lequel lesdits pixels de ladite pluralité sont groupés ensemble pour former un réseau bidimensionnel ou deux réseaux bidimensionnels, et dans lequel un circuit électronique (ELTR) associé auxdits éléments de détection (SPD) de ladite pluralité est placé latéralement ou de manière centrale par rapport audit réseau bidimensionnel ou auxdits deux réseaux bidimensionnels.
